# FASCICULE DE BREVET EUROPEEN

(11) **EP 2 522 480 B1**
(45) Date de publication et mention de la délivrance du brevet: **21.08.2013**
(21) Numéro de dépôt: 12166601.0
(22) Date de dépôt: 03.05.2012
(51) Int. Cl.: B29C 45/14, F16H 55/06, F16H 55/22

(54) **Roue d'engrenage, notamment pour réducteur à vis sans fin**
Zahnrad, insbesondere für Schneckenreduktionsgetriebe
Gear wheel in particular for worm reduction gear

(30) Priorité: 09.05.2011 FR 1153969
(43) Date de publication de la demande: 14.11.2012
(73) Titulaire: Jtekt Europe, 69540 Irigny (FR)
(72) Inventeur: Besnault, Vianney, 69520 GRIGNY (FR); Chauvrat, Philippe, 01480 VILLENEUVE (FR); Plataret, Nicolas, 69630 CHAPONOST (FR); Goutagny, Mathieu, 69110 SAINTE-FOY-LES-LYON (FR)
(74) Mandataire: Chevalier, Renaud Philippe

(56) Documents cités:
- WO-A2-2008/000220
- DE-A1-102005 013 134
- JP-A- 55 041 273
- JP-A- 61 070 269

## Description

La présente invention se rapporte à une roue d'engrenage notamment pour réducteur à vis sans fin et à un réducteur à vis sans fin comportant une telle roue d'engrenage, ainsi qu'à un procédé d'intégration de lames de renfort à l'intérieur d'une denture externe d'une telle roue d'engrenage.

Une roue d'engrenage pour réducteur à vis sans fin connue de l'état de la technique comporte :
- un moyeu habituellement métallique,
- une denture dite externe agencée en périphérie du moyeu, la denture externe étant réalisée dans un matériau plastique.

La réalisation de la denture externe dans un matériau plastique est particulièrement avantageuse relativement à une denture externe métallique dans la mesure où elle permet de réduire significativement les bruits d'engrènement sous efforts.

A titre d'exemples de cet état de la technique, il peut être cité les documents de brevets DE 10 2005 013 134 A1, JP 55-041273 A et JP 61-070269 A. Ces documents prévoient déjà que le moyeu métallique présente, à sa périphérie, une denture formée par des dents ou par des lames solidaires de ce moyeu, et s'avançant radialement à l'intérieur de la denture externe réalisée en matériau plastique. Un certain renforcement de ladite denture externe est ainsi déjà obtenu. En particulier, DE 10 2005 013 134 A1 divulgue le préambule de la revendication 1.

Cependant, la denture externe d'une telle roue d'engrenage de l'état de la technique subit des efforts d'engrènement importants avec la vis sans fin, notamment dans le domaine technique des directions assistées électriques de véhicules automobiles où les contraintes d'encombrement et d'effort d'assistance sont primordiales.

Ces efforts d'engrènement importants conduisent à différents modes de casse de la denture externe :
- rupture en pied de dent,
- cisaillement dans la zone d'engrènement avec la vis sans fin,
- phénomène d'interférence entre la denture externe et la vis sans fin.

Par ailleurs, les matériaux plastiques utilisés actuellement, notamment dans le domaine technique des directions assistées électriques, arrivent à leur limite de performance.

Bien entendu, le champ d'application de l'invention ne se limite pas au domaine technique des directions assistées électriques, pris ici uniquement à titre illustratif.

La présente invention vise à remédier en tout ou partie aux inconvénients précédemment exposés et concerne une roue d'engrenage perfectionnée, notamment pour réducteur à vis sans fin, la roue d'engrenage comportant :
- un moyeu,
- une denture dite externe agencée en périphérie du moyeu, la denture externe étant réalisée dans un matériau plastique,
   la roue d'engrenage comportant des premiers moyens de renfort de la denture externe agencés à l'intérieur de la denture externe de manière à transférer des efforts d'engrènement de la denture externe vers le moyeu, et comportant aussi des deuxièmes moyens de renfort de la denture externe agencés à l'intérieur de la denture externe et à distance des premiers moyens de renfort.

Les premiers moyens de renfort agencés à l'intérieur de la denture externe permettent d'améliorer la tenue mécanique de ladite denture tout en conservant une réalisation de ladite denture dans un matériau plastique avec des bruits d'engrènement sous efforts réduits. L'amélioration de la tenue mécanique provient du transfert des efforts d'engrènement vers le moyeu.

Les deuxièmes moyens de renfort agencés à distance des premiers moyens de renfort permettent un découplage du renfort de la denture externe qui améliore très nettement la tenue en fatigue de la denture externe. De tels deuxièmes moyens de renfort permettent de rigidifier la denture externe.

Dans un mode de réalisation, les premiers moyens de renfort comportent une denture dite interne agencée en périphérie du moyeu de manière à présenter un alignement radial avec la denture externe.

Un tel alignement radial des dentures interne et externe permet d'améliorer l'efficacité du transfert des efforts d'engrènement de la denture externe vers le moyeu.

Avantageusement, le moyeu et la denture interne sont réalisés dans un matériau plastique comportant au moins une charge de préférence sélectionnée dans le groupe comportant les fibres de verre et les fibres de carbone.

Ainsi, contrairement à une réalisation métallique, la réalisation dans un matériau plastique comportant une charge confère au moyeu et à la denture interne une plus grande souplesse afin de privilégier des rapports de contact élevés avec la denture externe, et ce tout en conservant une tenue mécanique satisfaisante.

Avantageusement, les deuxièmes moyens de renfort sont agencés radialement entre la tête des dents de la denture interne et la tête des dents de la denture externe.

De tels deuxièmes moyens de renfort sont adaptés pour lutter contre le cisaillement dans la zone d'engrènement avec la vis sans fin.

Selon une forme d'exécution, les deuxièmes moyens de renfort comportent au moins une lame de renfort à l'intérieur de chaque dent de la denture externe.

Selon une caractéristique additionnelle, la denture externe possède un cercle primitif, et la lame de renfort de chaque dent de la denture externe présente une largeur axiale comprise entre 45 et 90% de la largeur axiale de la dent correspondante prise au niveau du cercle primitif.

Selon une autre caractéristique additionnelle, la lame de renfort de chaque dent de la denture externe présente une hauteur radiale comprise entre 30 et 70% de la hauteur radiale de la dent correspondante.

De telles géométries axiale et radiale des lames de renfort sont adaptées pour assurer un renfort satisfaisant de la denture externe.

La présente invention se rapporte également à réducteur à vis sans fin, notamment de direction assistée électrique, remarquable en ce qu'il comporte :
- une roue d'engrenage conforme à l'invention, telle que définie ci-dessus,
- une vis sans fin agencée pour être en prise avec la denture externe de la roue d'engrenage.

La présente invention se rapporte enfin à un procédé d'intégration de lames de renfort à l'intérieur d'une denture externe d'une roue d'engrenage conforme à l'invention, telle de définie ci-dessus, le procédé étant remarquable en ce qu'il comporte les étapes consistant à :
- fournir un moule d'injection adapté pour former la denture externe de la roue d'engrenage après moulage,
- fournir une pluralité de tiges présentant chacune une première extrémité et une seconde extrémité opposée,
- relier les premières extrémités des tiges entre elles et les secondes extrémités des tiges entre elles respectivement par l'intermédiaire d'un premier et d'un second anneau de liaison de manière à former une cage, les tiges étant réparties circonférentiellement relativement aux premier et second anneaux de liaison de manière à former les lames de renfort après moulage,
- disposer la cage dans le moule d'injection,
- surmouler la cage,
- usiner les premier et second anneaux de liaison.

Un tel procédé selon l'invention permet de garantir la position des lames de renfort dans le moule d'injection à l'aide de la cage formée par les premier et second anneaux de liaison, la cage étant disposée dans ledit moule. L'étape d'usinage des premier et second anneaux de liaison permet d'assurer le découplage des lames de renfort avec la denture interne formant les premiers moyens de renfort.

D'autres caractéristiques et avantages apparaîtront dans la description qui va suivre d'un mode de réalisation d'une roue d'engrenage selon l'invention et d'un mode de mise en oeuvre d'un procédé d'intégration de lames de renfort selon l'invention, donnés à titre d'exemples en référence aux dessins annexés dans lesquels :
- la figure 1 est une vue partielle en coupe radiale d'une roue d'engrenage selon l'invention,
- la figure 2 est une vue à échelle agrandie de la zone A de la figure 1,
- la figure 3 est une vue partielle en transparence et en perspective d'une roue d'engrenage selon l'invention,
- la figure 4 est une vue en perspective d'une cage utilisée pour la mise en oeuvre du procédé d'intégration de lames de renfort selon l'invention,
- la figure 5 est une vue en perspective représentant la mise en place de la cage illustrée à la figure 4 dans un moule d'injection,
- la figure 6 est une vue de dessus représentant l'étape d'usinage des premier et second anneaux de liaison de la cage illustrée à la figure 4.

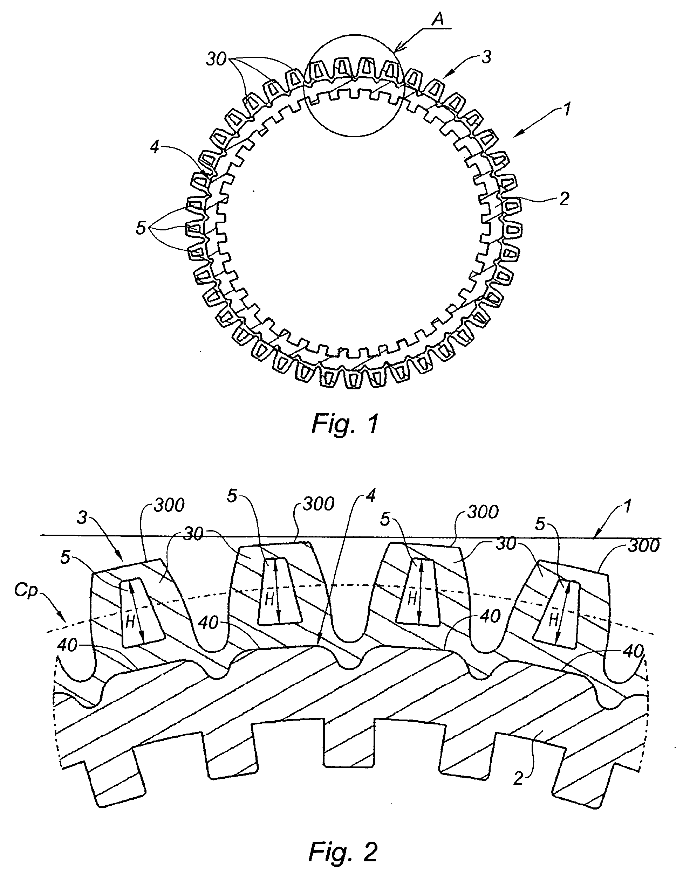

La roue d'engrenage 1 pour réducteur à vis sans fin illustrée aux figures 1 à 3 comporte :
- un moyeu 2,
- une denture dite externe 3 agencée en périphérie du moyeu 2, la denture externe 3 étant réalisée dans un matériau plastique.

La denture externe 3 comporte un ensemble de dents 30 régulièrement réparties circonférentiellement. La denture externe 3 est de type denture droite.

Le matériau plastique dans lequel est réalisée la denture externe 3 est de préférence un polymère sélectionné dans le groupe comportant les polymères thermoplastiques, les élastomères caoutchoutiques, les élastomères thermoplastiques ou des composites élastomériques. Ce matériau plastique peut comporter des charges organiques ou inorganiques, et/ou métalliques pour assurer une action de rigidification et/ou une fonction de lubrification de l'engrenage.

La roue d'engrenage 1 comporte des premiers moyens de renfort de la denture externe 3 agencés à l'intérieur de la denture externe 3 de manière à transférer des efforts d'engrènement de la denture externe 3 vers le moyeu 2. Les premiers moyens de renfort comportent une denture dite interne 4 agencée en périphérie du moyeu 2 de manière à présenter un alignement radial avec la denture externe 3. Une telle denture interne 4 forme renfort du pied des dents 30 de la denture externe 3.

Il convient de souligner que de tels premiers moyens de renfort ont une fonction différente d'une simple rigidification pouvant être liée à la présence d'une charge adaptée dans le matériau plastique. En effet, l'agencement des premiers moyens de renfort est tel qu'il permet d'opérer un transfert efficace des efforts d'engrènement de la denture externe 3 vers le moyeu 2 par l'intermédiaire de la surface délimitée par la tête 40 des dents de la denture interne 4, le moyeu 2 absorbant ces efforts d'engrènement.

Le moyeu 2 et la denture interne 4 peuvent être réalisés dans un matériau plastique comportant au moins une charge sélectionnée dans le groupe comportant les fibres de verre et les fibres de carbone. Le moyeu 2 et la denture interne 4 peuvent être monobloc.

La roue d'engrenage 1 comporte des deuxièmes moyens de renfort de la denture externe 3 agencés à l'intérieur de la denture externe 3 et à distance des premiers moyens de renfort. Plus précisément, les deuxièmes moyens de renfort comportent au moins une lame de renfort 5 à l'intérieur de chaque dent 30 de la denture externe 3. Chaque lame de renfort 5 est agencée radialement entre la tête 40 des dents de la denture interne 4 et la tête 300 des dents 30 de la denture externe 3. Chaque lame de renfort 5 présente une section radiale sensiblement trapézoïdale.

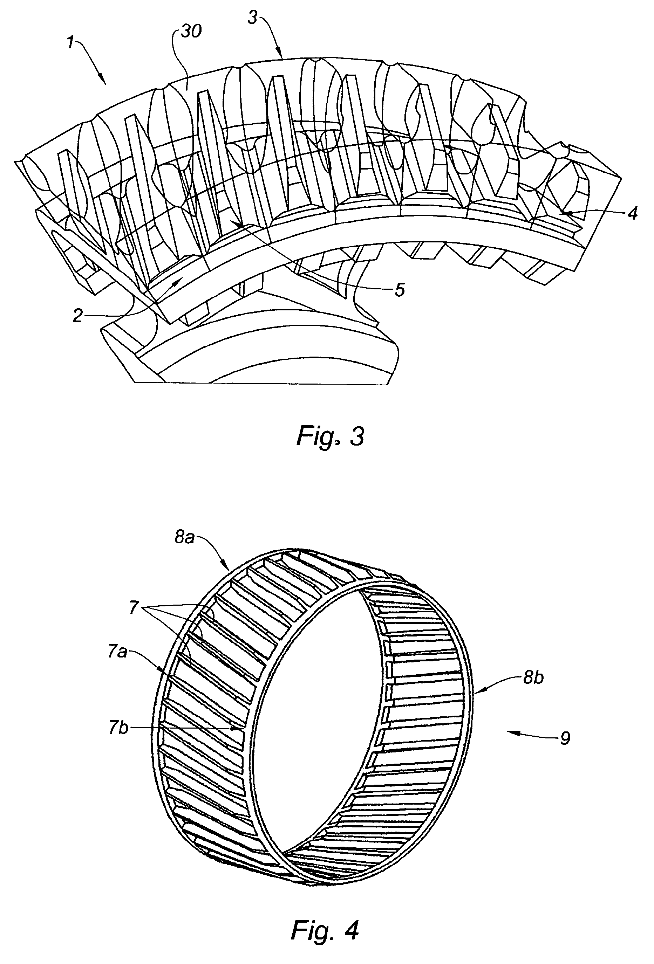

La denture externe 3 possède un cercle primitif Cp, représenté en pointillés à la figure 3. Le cercle primitif Cp définit les zones des dents 30 de la denture externe 3 possédant la même vitesse tangentielle, approximativement à mi-hauteur radiale des dents 30.

La lame de renfort 5 de chaque dent 30 de la denture externe 3 présente une largeur axiale comprise entre 45 et 90% de la largeur axiale de la dent 30 correspondante prise au niveau du cercle primitif Cp.

La lame de renfort 5 de chaque dent 30 de la denture externe 3 présente une hauteur radiale H comprise entre 30 et 70% de la hauteur radiale de la dent correspondante.

Bien entendu, par « axiale », on entend s'étendant suivant l'axe de rotation de la roue d'engrenage 1 ; et par « radiale », on entend s'étendant suivant un rayon de la roue d'engrenage 1.

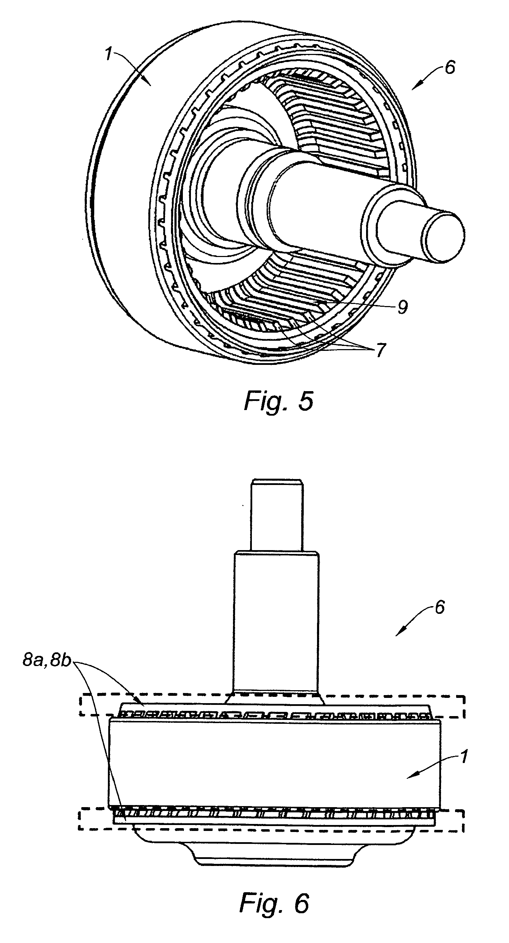

Le procédé d'intégration de lames de renfort 5 à l'intérieur d'une denture externe 3 d'une roue d'engrenage 1 illustré aux figures 4 à 6 comporte les étapes consistant à :
- fournir un moule d'injection 6 adapté pour former la denture externe 3 de la roue d'engrenage 1 après moulage,
- fournir une pluralité de tiges 7 présentant chacune une première extrémité 7a et une seconde extrémité 7b opposée,
- relier les premières extrémités 7a des tiges 7 entre elles et les secondes extrémités 7b des tiges 7 entre elles respectivement par l'intermédiaire d'un premier et d'un second anneau de liaison 8a, 8b de manière à former une cage 9, les tiges 7 étant réparties circonférentiellement relativement aux premier et second anneaux de liaison 8a, 8b de manière à former les lames de renfort 5 après moulage,
- disposer la cage 9 dans le moule d'injection 6,
- surmouler la cage 9.
- usiner les premier et second anneaux de liaison8a, 8b.

Bien entendu, les modes de réalisation de l'invention décrits ci-dessus ne présentent aucun caractère limitatif. Des détails et améliorations peuvent y être apportés dans d'autres variantes d'exécution sans pour autant sortir du cadre de l'invention, telle que définie dans les revendications annexées.

C'est ainsi notamment que :
- la denture externe 3 peut être du type denture cylindrique droite ou hélicoïdale,
- la roue d'engrenage 1 peut être utilisée pour un engrenage de type conique (concourant) ou de type gauche.

## Revendications

1. Roue d'engrenage (1), notamment pour réducteur à vis sans fin, la roue d'engrenage (1) comportant :
- un moyeu (2),
- une denture dite externe (3) agencée en périphérie du moyeu (2), la denture externe (3) étant réalisée dans un matériau plastique,
la roue d'engrenage (1) comportant des premiers moyens de renfort (4) de la denture externe (3) agencés à l'intérieur de la denture externe (3) de manière à transférer des efforts d'engrènement de la denture externe (3) vers le moyeu (2), caractérisée en ce qu'elle comporte des deuxièmes moyens de renfort (5) de la denture externe (3) agencés à l'intérieur de la denture externe (3) et radialement à distance des premiers moyens de renfort (4).

2. Roue d'engrenage (1) selon la revendication 1, **caractérisée en ce que** les premiers moyens de renfort comportent une denture dite interne (4) agencée en périphérie du moyeu(2) de manière à présenter un alignement radial avec la denture externe (3).

3. Roue d'engrenage (1) selon la revendication 2, **caractérisée en ce que** le moyeu (2) et la denture interne (4) sont réalisés dans un matériau plastique comportant au moins une charge de préférence sélectionnée dans le groupe comportant les fibres de verre et les fibres de carbone.

4. Roue d'engrenage (1) selon la revendication 2 ou 3, **caractérisée en ce que** les deuxièmes moyens de renfort (5) sont agencés radialement entre la tête (40) des dents de la denture interne (4) et la tête (300) des dents(30) de la denture externe (3).

5. Roue d'engrenage (1) selon la revendication 4, **caractérisée en ce que** les deuxièmes moyens de renfort comportent au moins une lame de renfort (5) à l'intérieur de chaque dent(30) de la denture externe (3).

6. Roue d'engrenage (1) selon la revendication 5, **caractérisée en ce que** la denture externe (3) possède un cercle primitif (Cp), et **en ce que** la lame de renfort (5) de chaque dent (30) de la denture externe (3) présente une largeur axiale comprise entre 45 et 90% de la largeur axiale de la dent correspondante (30) prise au niveau du cercle primitif (Cp).

7. Roue d'engrenage (1) selon la revendication 5 ou 6, **caractérisée en ce que** la lame de renfort (5) de chaque dent (30) de la denture externe (3) présente une hauteur radiale (H) comprise entre 30 et 70% de la hauteur radiale de la dent (30) correspondante.

8. Réducteur à vis sans fin, notamment de direction assistée électrique, **caractérisé en ce qu'**il comporte :
- une roue d'engrenage (1) selon l'une des revendications 1 à 7,
- une vis sans fin agencée pour être en prise avec la denture externe (3) de la roue d'engrenage (1).

9. Procédé d'intégration de lames de renfort (5) à l'intérieur d'une denture externe (3) d'une roue d'engrenage (1) selon l'une des revendications 5 à 7, **caractérisé en ce qu'**il comporte les étapes consistant à :
- fournir un moule d'injection (6)adapté pour former la denture exteme(3) de la roue d'engrenage(1) après moulage,
- fournir une pluralité de tiges(7) présentant chacune une première extrémité (7a) et une seconde extrémité (7b) opposée,
- relier les premières extrémités (7a) des tiges(7) entre elles et les secondes extrémités (7b) des tiges (7) entre elles respectivement par l'intermédiaire d'un premier et d'un second anneau de liaison (8a, 8b) de manière à former une cage (9), les tiges (7) étant réparties circonférentiellement relativement aux premier et second anneaux de liaison (8a, 8b) de manière à former les lames de renfort(5) après moulage,
- disposer la cage (9) dans le moule d'injection (6),
- surmouler la cage (9),
- usiner les premier et second anneaux de liaison (8a, 8b).

## Patentansprüche

1. Zahnrad (1), insbesondere für Schneckenreduktionsgetriebe, wobei das Zahnrad (1) aufweist:
- eine Nabe (2),
- eine externe Zahnung (3), die auf dem Umfang der Nabe (2) ausgebildet ist, wobei die externe Zahnung (3) aus einem Kunststoffmaterial hergestellt ist,
wobei das Zahnrad (1) erste Verstärkungsmittel (4) der externen Zahnung aufweist, die in der externen Zahnung (3) derart ausgebildet sind, dass die Eingriffkräfte der externen Zahnung (3) auf die Nabe (2) übertragen werden, **dadurch gekennzeichnet, dass** es zweite Verstärkungsmittel (5) der externen Zahnung (3) aufweist, die in der externen Zahnung (3) ausgebildet und radial von den ersten Verstärkungsmitteln (4) beabstandet sind.

2. Zahnrad (1) nach Anspruch 1, **dadurch gekennzeichnet, dass** die ersten Verstärkungsmittel eine interne Zahnung (4) aufweisen, die auf dem Umfang der Nabe (2) derart ausgebildet ist, dass sie eine radiale Fluchtung mit der externen Zahnung (3) aufweist.

3. Zahnrad (1) nach Anspruch 2, **dadurch gekennzeichnet, dass** die Nabe (2) und die interne Zahnung (4) aus einem Kunststoffmaterial hergestellt sind, das mindestens eine Charge aufweist, die vorzugsweise aus der Gruppe ausgewählt ist, die die Glasfasern und die Karbonfasern aufweist.

4. Zahnrad (2) nach Anspruch 2 oder 3, **dadurch gekennzeichnet, dass** die zweiten Verstärkungsmittel (5) radial zwischen dem Kopf (4) der Zähne der internen Zahnung (4) und dem Kopf (300) der Zähne (30) der externen Zahnung ausgebildet sind.

5. Zahnrad (1) nach Anspruch 4, **dadurch gekennzeichnet, dass** die zweiten Verstärkungsmittel mindestens eine Verstärkungszunge (5) in jedem Zahn (30) der externen Zahnung (3) aufweisen.

6. Zahnrad (1) nach Anspruch 5, **dadurch gekennzeichnet, dass** die externe Zahnung (3) einen Basiskreis (Cp) besitzt, und dass die Verstärkungszunge (5) jedes Zahns (30) der externen Zahnung (3) eine axiale Breite zwischen 45 und 90% der axialen Breite des entsprechenden Zahns (30) aufweist, ermittelt auf Ebene des Basiskreises (Cp).

7. Zahnrad (1) nach Anspruch 5 oder 6, **dadurch gekennzeichnet, dass** die Verstärkungszunge (5) jedes Zahns (30) der externen Zahnung (3) eine radiale Höhe (H) zwischen 30 und 70% der radialen Höhe des entsprechenden Zahns (30) aufweist.

8. Schneckenreduktionsgetriebe, insbesondere für elektrische Servolenkung, **dadurch gekennzeichnet, dass** es aufweist:
- ein Zahnrad (1) nach einem der Ansprüche 1 bis 7,
- eine Schnecke, die ausgebildet ist, um mit der externen Zahnung (3) des Zahnrads (1) in Eingriff zu sein.

9. Verfahren zur Integration von Verstärkungszungen (5) in eine externe Zahnung (3) eines Zahnrads (1) nach einem der Ansprüche 5 bis 7, **dadurch gekennzeichnet, dass** es die folgenden Schritte umfasst:
- Bereitstellen einer entsprechenden Einspritzform (6), um die externe Zahnung (3) des Zahnrads (1) nach dem Formen zu formen,
- Bereitstellen einer Vielzahl von Stangen (7), die jeweils ein erstes Ende (7a) und ein gegenüberliegendes zweites Ende (7b) aufweisen,
- Verbinden der ersten Enden (7a) der Stangen (7) miteinander und der zweiten Enden (7b) der Stangen (7) miteinander beziehungsweise mit Hilfe eines ersten und eines zweiten Verbindungsrings (8a, 8b) derart, dass ein Käfig (9) gebildet wird, wobei die Stangen (7) umfangmäßig relativ zu ersten und zweiten Verbindungsring (8a, 8b) derart verteilt sind, dass nach dem Formen die Verstärkungszungen (5) gebildet werden,
- Anordnen des Käfigs (9) in der Einspritzform (6),
- Overmoulding des Käfigs (9),
- Fertigen des ersten und zweiten Verbindungsrings (8a, 8b).

## Claims

1. A gear wheel (1), in particular for a worm reducer, the gear wheel (1) including:
- a hub (2),
- a so-called outer toothing (3) arranged on the periphery of the hub (2), the outer toothing (3) being made from a plastic material,
the gear wheel (1) including first reinforcing means (4) of the outer toothing (3) arranged inside the outer toothing (3) so as to transfer gear mesh forces from the outer toothing (3) toward the hub (2), **characterized in that** it includes second reinforcing means (5) for the outer toothing (3) arranged inside the outer toothing (3) and radially separated from the first reinforcing means (4).

2. The gear wheel (1) according to claim 1, **characterized in that** the first reinforcing means include a so-called inner toothing (4) arranged on the periphery of the hub (2) so as to have a radial alignment with the outer toothing (3).

3. The gear wheel (1) according to claim 2, **characterized in that** the hub (2) and the inner toothing (4) are made from a plastic material including at least one filler preferably selected from the group including glass fibers and carbon fibers.

4. The gear wheel (1) according to claim 2 or 3, **characterized in that** the second reinforcing means (5) are arranged radially between the head (40) of the teeth of the inner toothing (4) and the head (300) of the teeth (30) of the outer toothing (3).

5. The gear wheel (1) according to claim 4, **characterized in that** the second reinforcing means include at least one reinforcing strip (5) inside each tooth (30) of the outer toothing (3).

6. The gear wheel (1) according to claim 5, **characterized in that** the outer toothing (3) has a pitch circle (Cp), and **in that** the reinforcing strip (5) of each tooth (30) of the outer toothing (3) has an axial width comprised between 45 and 90% of the axial width of the corresponding tooth (30) considered at the pitch circle (Cp).

7. The gear wheel (1) according to claim 5 or 6, **characterized in that** the reinforcing strip (5) of each tooth (30) of the outer toothing (3) has a radial height (H) comprised between 30 and 70% of the radial height of the corresponding tooth (30).

8. A worm reducer, in particular for an electric power-assisted steering column, **characterized in that** it includes:
- a gear wheel (1) according to one of claims 1 to 7,
- a worm arranged to engage with the outer toothing (3) of the gear wheel (1).

9. A method for integrating reinforcing strips (5) inside an outer toothing (3) of a gear wheel (1) according to one of claims 5 to 7, **characterized in that** it includes the following steps:
- providing an injection mold (6) suitable for forming the outer toothing (3) of the gear wheel (1) after molding,
- providing a plurality of rods (7) each having a first end (7a), and a second opposite end (7b),
- connecting the first ends (7a) of the rods (7) to each other and the second ends (7b) of the rods (7) to each other respectively by means of a first and a second connecting ring (8a, 8b) so as to form a cage (9), the rods (7) being distributed circumferentially relative to the first and second connecting rings (8a, 8b) so as to form the reinforcing strips (5) after molding,
- positioning the cage (9) in the injection mold (6),
- overmolding the cage (9),
- machining the first and second connecting rings (8a, 8b).
